# EUROPÄISCHE PATENTSCHRIFT

(11) **EP 3 950 886 B1**
(45) Veröffentlichungstag und Bekanntmachung des Hinweises auf die Patenterteilung: **02.10.2024**
(21) Anmeldenummer: 21185965.7
(22) Anmeldetag: 16.07.2021
(51) Int. Cl.: C10B 49/02, C10B 53/02

(54) **VORRICHTUNG ZUM PYROLYSIEREN VON PYROLYSEGUT**
DEVICE FOR PYROLYZING PYROLYSIS GOODS
DISPOSITIF DE PYROLYSE DU PRODUIT DE PYROLYSE

(30) Priorität: 17.07.2020 DE 102020119003
(43) Veröffentlichungstag der Anmeldung: 09.02.2022
(73) Patentinhaber: Prodana GmbH, 92318 Neumarkt (DE)
(72) Erfinder: LEPENICA, Kemal, 92318 Neumarkt (DE)
(74) Vertreter: Dennemeyer & Associates S.A.

(56) Entgegenhaltungen:
- EP-A1- 2 752 478
- EP-A1- 3 399 007
- IT-A1- UB20 153 805

## Beschreibung

Die Erfindung betrifft eine Vorrichtung zum Pyrolysieren von Pyrolysegut

Aus dem Stand der Technik ist eine Vielzahl von Vorrichtungen bekannt, mittels denen Pyrolysegut, wie Biomasse, pyrolysiert werden kann, um beispielsweise Pflanzenkohle herzustellen. Die hergestellte Pflanzenkohle kann mit Nährstoffen aufgeladen und dann zur Verbesserung von Böden eingesetzt werden.

Bei der Pyrolyse ist zwischen einer direkten und einer indirekten Pyrolyse zu unterscheiden. Bei direkter Pyrolyse werden heiße Gase über das Pyrolysegut geleitet, während bei der indirekten Pyrolyse der Reaktionsraum von außen erhitzt wird.

Die Nachfrage nach Pflanzenkohle durch Privatpersonen ist in den letzten Jahren gestiegen, sodass auch Vorrichtungen bekannt sind, die durch Privatpersonen bedient werden können. Es sind Vorrichtungen bekannt, die beispielsweise in einem Hausgarten zum Einsatz kommen können. Bei derartigen Vorrichtungen erfolgt die Pyrolyse hauptsächlich nach dem direkten Pyrolyseverfahren. Die Vorrichtungen weisen einen zylinder- oder trichterförmigen Aufnahmekörper auf, in den die Biomasse eingebracht wird. Zum Herstellen von Pflanzenkohle wird die in einem Hohlraum des Aufnahmekörpers befindliche Biomasse verbrannt.

EP 3 399 007 A1, EP 2 752 478 A1 und IT UB20 153 805 beschreiben Vorrichtungen für die Pyrolyse von Pyrolysegut, welche Fluidverteilleitungen zum Verteilen des durch die Fluidzuführleitung zugeführten Fluids im Reaktor aufweisen.

Die bekannten Vorrichtungen weisen den Nachteil auf, dass der Verbrennungsvorgang nicht gesteuert werden kann und kontinuierlich Pyrolysegut zugeführt werden muss. Dies führt dazu, dass Biomassebereiche im Aufnahmekörper nicht oder nicht vollständig verbrennen. Daher kann die Biomasse unvollständig verbrennen und/oder es können Schadstoffgase bei dem Verbrennungsvorgang entstehen.

Die Aufgabe der vorliegenden Erfindung besteht darin, eine verbesserte Vorrichtung zum Pyrolysieren von Pyrolysegut bereitzustellen.

Die Aufgabe wird gelöst durch eine Vorrichtung zum Pyrolysieren von Pyrolysegut gemäß Anspruch 1.

Die erfindungsgemäße Vorrichtung weist den Vorteil auf, dass ein verbesserter Pyrolysevorgang realisiert werden kann. Insbesondere ist es möglich, sicherzustellen, dass eine gleichmäßige Verbrennung des Pyrolyseguts in dem Aufnahmekörper erfolgt. Dies ist möglich, weil mehrere Fluidverteilleitungen in dem Hohlraum angeordnet sind und sich in unterschiedliche Richtungen erstrecken. Dementsprechend ist es möglich, dass das Fluid an verschiedene Stellen des Aufnahmekörpers zugeführt wird. Insofern kann das Risiko einer unvollständigen Verbrennung des im Aufnahmekörper befindlichen Pyrolyseguts mit den daraus resultierenden Schadstoffgasen auf einfache Weise verringert werden.

Als Pyrolyse wird ein thermo-chemischer Prozess zur Zersetzung verschiedener Ausgangsstoffe verstanden. Bei dem Prozess werden kohlenstoffhaltige Verbindungen aufgespalten. Dabei erzeugen hohe Reaktionstemperaturen einen Bindungsbruch, der große Moleküle in kleinere spaltet. Die thermische Energie zur Zersetzung der Biomasse kann in der erfindungsgemäßen Vorrichtung aus der Verbrennung des Pyrolyseguts selbst stammen.

Das Pyrolysegut kann Biomasse sein. Als Biomasse werden alle tierischen und pflanzlichen Erzeugnisse verstanden, die zur Gewinnung von Heizenergie eingesetzt werden können. So können beispielsweise Holzpellets, Hackschnitzel, Stroh, Getreide, Holz und pflanzliches Treibgut Biomasse sein.

Das Fluid kann ein gasförmiger Stoff sein. Insbesondere kann das Fluid Luft sein. Als fluidische Verbindung zwischen der Fluidzuführleitung und den Fluidverteilleitungen wird eine Verbindung verstanden, bei der Fluid aus der Fluidzuführleitung in die Fluidverteilleitungen strömen kann. Bei einer besonderen Ausführung können die Fluidverteilleitungen in einer Ebene angeordnet sein. Dabei können alle Fluidverteilleitungen in der Ebene angeordnet sein. Die Ebene kann eine Normalebene zu einer Mittelachse des Aufnahmekörpers sein. Dadurch ist sichergestellt, dass das Pyrolysegut, das in der Nähe der Fluidverteilleitungen angeordnet ist, gleichmäßig entzündet werden kann, was hinsichtlich des Verbrennungsvorgangs vorteilhaft ist und weniger Schadstoffgase entstehen.

Besonders vorteilhaft ist, wenn eine Fluidverteilleitung mehrere Auslassöffnungen aufweist. Durch die Auslassöffnung kann das in der Fluidverteilleitung befindliche Fluid in den Hohlraum des Aufnahmekörpers strömen. Die Auslassöffnungen können in radialer Richtung bezogen auf die Mittelachse des Aufnahmekörpers benachbart zueinander angeordnet sein. Somit ist auf einfache Weise sichergestellt, dass eine gleichmäßige Zündung der Biomasse entlang der Erstreckungsrichtung der Fluidverteilleitung erreicht werden kann. Dabei können in der Vorrichtung alle Fluidverteilleitungen wie zuvor beschrieben ausgebildet sein.

Die Fluidzuführleitung kann eine Isolierung aufweisen, mittels der verhindert wird, dass das in der Fluidzuführleitung vor einer Verteilung in den Fluidverteilleitungen zu stark abkühlt. Die Isolierung kann Keramikfaserwolle aufweisen.

Die Fluidverteilleitungen können sich von der Fluidzuführleitung sternförmig erstrecken. Insbesondere können sich die Fluidverteilleitungen in radialer Richtung bezogen auf die Mittelachse des Aufnahmekörpers erstrecken. Dadurch ist auf einfache Weise sichergestellt, dass das Fluid zu einem großen Teil des Aufnahmekörpers zugeführt werden kann und dass das in dem Bereich befindliche Pyrolysegut gleichmäßig entzündet wird.

Bei einer besonderen Ausführung kann die Vorrichtung eine Fluidverteileinheit mit einem Verteileinheithohlraum zum Verteilen des durch die Fluidzuführleitung zugeführten Fluids auf die Fluidverteilleitungen aufweisen. Die Fluidverteileinheit ermöglicht somit auf einfache Weise, dass das in der Fluidzuführleitung befindliche Fluid auf die einzelnen Fluidverteilleitungen aufgeteilt wird. Insofern kann das Fluid durch die Fluidzuführleitung und die Fluidverteilleitungen in den Aufnahmekörper zugeführt werden. Dabei kann durch Einstellen von Fluidparametern der Verbrennungsvorgang beeinflusst werden.

Ein Ende der Fluidzuführleitung kann in dem Verteileinheithohlraum münden. Außerdem kann ein Ende der Fluidverteilleitung in dem Verteileinheithohlraum münden. Insbesondere können alle Fluidverteilleitungen an ihrem jeweiligen Ende in den Verteileinheithohlraum münden. Im Ergebnis kann eine Aufteilung des durch die Fluidzuführleitung zugeführten Fluids auf die Fluidverteilleitungen auf einfache Weise erfolgen.

Die Fluidverteileinheit kann mittig im Hohlraum des Aufnahmekörpers angeordnet sein. Insofern ist die Fluidverteileinheit derart angeordnet, dass die Mittelachse des Aufnahmekörpers durch die Fluidverteileinheit läuft.

Die Vorrichtung kann ein Stützelement aufweisen, das innerhalb des Hohlraums angeordnet ist. Das Stützelement kann die Fluidverteilleitungen, insbesondere entlang der Mittelachse des Aufnahmekörpers und/oder in radialer Richtung bezogen auf die Mittelachse, stützen. Insbesondere kann das Stützelement die Fluidverteileinheit, insbesondere direkt, stützen. Das Stützelement kann sich entlang der Mittelachse des Aufnahmekörpers erstrecken. Dabei kann sich ein Ende des Stützelements am Aufnahmekörper und/oder an einem nachstehend näher beschriebenen Abdeckelement abstützen. Darüber hinaus kann sich das Stützelement auch an einer Mantelfläche des Aufnahmekörpers abstützen.

Bei einer besonderen Ausführung kann die Vorrichtung eine andere Fluidzuführleitung, die teilweise außerhalb des Aufnahmekörpers angeordnet ist, und mehrere in dem Hohlraum angeordnete andere Fluidverteilleitungen zum Verteilen des durch die andere Fluidzuführleitung zugeführten Fluids innerhalb des Hohlraums aufweisen, wobei die andere Fluidverteilleitungen mit der anderen Fluidzuführleitung fluidisch verbunden sind und sich innerhalb des Hohlraums in unterschiedliche Richtungen erstrecken.

Die andere Fluidzuführleitung kann eine Isolierung aufweisen, mittels der verhindert wird, dass das in der anderen Fluidzuführleitung vor einer Verteilung in den anderen Fluidverteilleitungen zu stark abkühlt. Die Isolierung kann Keramikfaserwolle aufweisen.

Die anderen Fluidzuführleitungen bieten den Vorteil, dass in der Vorrichtung unterschiedliche Zündzeitpunkte und/oder Zündbereiche eingestellt werden können. Insbesondere kann sich der zum Zündzeitpunkt, wann Pyrolysegut von dem durch die Fluidverteilleitungen ausgegebenen gezündet wird, von dem Zündzeitpunkt unterscheiden, wann Pyrolysegut von dem durch die anderen Fluidverteilleitungen ausgegebenen Fluid gezündet wird. Im Ergebnis kann durch die Steuerung oder Regelung von Zündzeitpunkten und/oder Zündbereichen gezielt auf den Verbrennungsvorgang Einfluss genommen werden. Darüber hinaus kann die Pyrolysetemperatur nach der erfolgten Zündung eingestellt werden, indem die Sauerstoffzufuhr durch unterschiedliche Volumenströme unterschiedlich ausgestaltet wird.

Die Vorrichtung kann verschiedene Sensoren aufweisen, wie beispielsweise Temperatur- und/oder Lambdasensoren. Die ermittelten Sensorwerte können zur Bestimmung des Zündzeitpunkts und/oder oder des Zündbereichs herangezogen werden. Alternativ oder zusätzlich können der Zündzeitpunkt und/oder der Zündbereich basierend auf den ermittelten Sensorwerten gesteuert und/oder geregelt werden.

Die anderen Fluidverteilleitungen können in einer anderen Ebene angeordnet sein. Dabei können alle anderen Fluidverteilleitungen in den anderen Ebenen angeordnet sein. Die andere Ebene kann versetzt zu der Ebene angeordnet sein, in der die Fluidverteilleitungen angeordnet sind. Insbesondere kann die andere Ebene entlang der Mittelachse des Aufnahmekörpers versetzt zu der Ebene angeordnet sein. Darüber hinaus kann die andere Ebene parallel zu der Ebene verlaufen.

Bei einer besonderen Ausführung kann wenigstens eine Luftverteilleitung in tangentialer Richtung bezogen auf die Mittelachse des Aufnahmekörpers versetzt zu der Luftverteilleitung angeordnet sein. Insbesondere können alle Luftverteilleitungen in tangentialer Richtung versetzt zu den Luftverteilleitungen angeordnet sein. Dadurch ist auch sichergestellt, dass in Umfangsrichtung des Aufnahmekörpers das Pyrolysegut gleichmäßig gezündet werden kann.

Dabei kann sich eine Länge einer Luftverteilleitung von einer Länge einer anderen Luftverteilleitung unterscheiden. Darüber hinaus ist möglich, dass die einzelnen Luftverteilleitungen und/oder anderen Luftverteilleitungen in ihrer Länge voneinander jeweils unterscheiden. Als Länge wird die Ausdehnung der jeweiligen Leitung in Erstreckungsrichtung der Luftverteilleitung und/oder der anderen Luftverteilleitung innerhalb des Hohlraums verstanden.

Die Vorrichtung kann eine andere Fluidverteileinheit mit einem anderen Verteileinheithohlraum zum Verteilen des durch die andere Fluidzuführleitung zugeführten Fluids auf die anderen Fluidverteilleitungen aufweisen. Dadurch kann das in der anderen Fluidzuführleitung befindliche Fluid auf einfache Weise auf die anderen Fluidverteilleitungen aufgeteilt werden.

Dabei kann das Stützelement sowohl die andere Fluidverteileinheit als auch die Fluidverteileinheit, insbesondere direkt, stützen. Darüber hinaus kann das Stützelement sowohl die Fluidverteilleitungen als auch die anderen Fluidverteilleitungen stützen. Im Ergebnis wird eine einfach aufgebaute Vorrichtung realisiert, bei der mittels eines einzigen Stützelements mehrere Bauteile gestützt werden können.

Die Fluidzuführleitung und die andere Fluidzuführleitung können wenigstens teilweise in einer Normalebene zur Mittelachse des Aufnahmekörpers angeordnet sein. Insbesondere können der außerhalb des Aufnahmekörpers befindliche Teil der Fluidzuführleitung und der außerhalb des Aufnahmekörpers befindliche Teil der anderen Fluidzuführleitung in der Normalebene zur Mittelachse des Aufnahmekörpers angeordnet sein.

Die Vorrichtung kann eine Heizeinrichtung aufweisen, mittels der das Fluid, das sich in der Fluidzuführleitung befindet, und oder das Fluid, das sich in der anderen Fluidzuführleitung befindet, aufgeheizt werden kann. Dabei kann das jeweilige Fluid vor einem Eintritt in den Hohlraum des Aufnahmekörpers aufgeheizt werden.

Bei einer besonderen Ausführung kann ein Fluidstrom und/oder eine Fluidtemperatur in der Fluidzuführleitung und ein Fluidstrom und/oder eine Fluidtemperatur in der anderen Fluidzuführleitung unabhängig voneinander gesteuert und/oder geregelt werden. Die Steuerung kann basierend auf den ermittelten Sensorwerten erfolgen.

Dabei kann die Vorrichtung eine elektrische Steuer- oder Regelvorrichtung zum Steuern oder Regeln des Fluidstroms und/oder der Fluidtemperatur in der Fluidzuführleitung und des Fluidstroms und/oder der Fluidtemperatur in der anderen Fluidzuführleitung aufweisen. Die Steuer- oder Regelvorrichtung kann die ermittelten Sensorwerte auswerten und dementsprechend Steuer- oder Regelbefehle zum Einstellen des jeweiligen Fluidstroms und/oder der jeweiligen Fluidtemperatur ausgeben. Dabei kann die Steuer- oder Regelvorrichtung den Fluidstrom und/oder die Fluidtemperatur des in der Fluidzuführleitung befindlichen Fluids und den Fluidstrom und/oder die Fluidtemperatur des in der anderen Fluidzuführleitung befindlichen Fluids unabhängig voneinander steuern oder regeln.

Die erfindungsgemäße Vorrichtung weist ein Abdeckelement zum Abdecken eines Teils einer Wandung des Aufnahmekörpers auf, das eine Vielzahl von Löchern aufweist und in dem Hohlraum angeordnet ist. Das Abdeckelement kann derart in dem Hohlraum angeordnet sein, dass das Pyrolysegut auf dem Abdeckelement liegt.

Dabei kann das Abdeckelement einen Aufnahmekörperboden abdecken. Darüber hinaus kann das Abdeckelement derart in dem Hohlraum angeordnet sein, dass ein Spalt zwischen der Wandung des Aufnahmekörpers und dem Abdeckelement besteht. Wie nachstehend näher beschrieben ist, kann ein Fluid in den Spalt zugeführt werden. Das Fluid strömt dann durch die Löcher des Abdeckelements in den Hohlraum des Aufnahmekörpers. Da die Biomasse auf dem Abdeckelement liegt, ist somit sichergestellt, dass das Fluid durch das Pyrolysegut strömt. Somit kann eine gleichmäßige Zündung des in einem Boden- und/oder Seitenbereich des Aufnahmekörpers angeordneten Pyrolyseguts erreicht werden.

Dabei können das Abdeckelement, die Fluidverteilleitungen und/oder die anderen Fluidverteilleitungen derart angeordnet sein, dass die Strömungsrichtung des aus dem Abdeckelement ausströmenden Fluids zur Fluidverteilleitung gerichtet ist. Die Strömungsrichtung des aus der Fluidverteilleitung ausströmenden Fluids ist zum Abdeckelement gerichtet. Alternativ können die Strömungsrichtungen der ausströmenden Fluide gleichgerichtet sein. Insbesondere kann die Strömungsrichtung in eine Richtung weg von dem Abdeckelement weisen.

Das Abdeckelement kann kegelstumpfförmig ausgebildet sein. Dadurch ist sichergestellt, dass im Wesentlichen keine Todbereiche im Aufnahmekörper bestehen, zu denen das Fluid nicht gelangt und bei denen das Pyrolysegut verspätet oder gar nicht zündet. Darüber hinaus kann das Abdeckelement derart ausgebildet sein, dass es mit dem Aufnahmekörper wieder lösbar verbunden ist.

Die erfindungsgemäße Vorrichtung weist zudem eine Fluidzugabeleitung auf, wobei das durch die Fluidzugabeleitung zugeführte Fluid durch die Löcher im Abdeckelement zu dem Pyrolysegut zuführbar ist, wobei die Fluidzugabeleitung im Aufnahmekörper mündet. Insbesondere kann das durch die Fluidzugabeleitung zugeführte Fluid zuerst in den Spalt einströmen und von dort durch die Löcher zu dem Pyrolysegut zugeführt werden. Der Spalt kann sich in tangentialer und radialer Richtung des Aufnahmekörpers erstrecken. Insbesondere kann das Abdeckelement derart ausgebildet sein, dass entlang der gesamten tangentialen und radialen Richtung bezogen auf die Mittelachse des Aufnahmekörpers Fluid aus dem Spalt durch die Löcher zu dem Pyrolysegut zugeführt werden kann.

Dabei kann das durch die Fluidzugabeleitung zugeführte Fluid eine niedrigere oder höhere Temperatur aufweisen als das durch die Fluidzuführleitung und/oder die andere Fluidzuführleitung jeweils zugeführte Fluid.

Bei einer besonderen Ausführung kann der Aufnahmekörper ein offenes Ende mit einer Zuführöffnung zum Zuführen von Pyrolysegut in den Aufnahmekörper aufweisen. Der Aufnahmekörper kann zylinderförmig ausgebildet sein.

Dabei kann die Vorrichtung einen bewegbaren Deckel aufweisen, mittels dem die Zuführöffnung verschließbar ist. Vorzugsweise wird die Zuführöffnung durch den Deckel verschlossen, wenn sich die Vorrichtung in einem Betriebszustand befindet. Beim Betriebszustand wird das Pyrolysegut pyrolysiert, um beispielsweise Pflanzenkohle herzustellen.

Der Deckel kann linear beweglich sein. Bei einer Öffnungsstellung des Deckels kann der Deckel oberhalb des Aufnahmekörpers angeordnet sein. Bei der Öffnungsstellung kann Pyrolysegut in den Aufnahmekörper eingebracht werden. Zum Realisieren des Betriebszustands wird der Deckel aus der Öffnungsstellung abgesenkt, um die Zuführöffnung zu verschließen.

Die Vorrichtung kann einen Haltekörper zum drehbaren Halten des Aufnahmekörpers aufweisen. Dazu kann der Aufnahmekörper mit dem Haltekörper gelenkig verbunden sein. Dabei kann eine Drehachse des Aufnahmekörpers senkrecht zu der Mittelachse des Aufnahmekörpers verlaufen. Der Haltekörper ist ortsfest angeordnet.

Dabei kann der Aufnahmekörper relativ zu dem Haltekörper in eine Ausgabestellung gedreht werden, in der Pyrolysegut ausgebbar ist. Dies bietet den Vorteil, dass pyrolysiertes Pyrolysegut auf einfache Weise aus dem Aufnahmekörper entnommen werden kann. Alternativ kann der Aufnahmeköper in eine Betriebsstellung überführt werden, in der die Biomasse pyrolysiert wird. Beim Betriebszustand der Vorrichtung befindet sich der Aufnahmekörper in der Betriebsstellung.

Die Vorrichtung kann eine Zündeinrichtung zum Zünden von Pyrolysegut aufweisen. Die Zündeinrichtung kann zur Mittelachse des Aufnahmekörpers parallel verlaufen und/oder in dem Hohlraum des Aufnahmekörpers angeordnet sein. Dabei kann die Zündeinrichtung eine Heizquelle, insbesondere einen Glühzünder, und ein Heizrohr aufweisen. Die Heizquelle kann innerhalb eines Hohlraums des Heizrohrs angeordnet sein. Das Heizrohr kann mehrere Durchbrüche aufweisen, die in Längsrichtung des Heizrohrs versetzt zueinander angeordnet sein können und/oder sich in radialer Richtung von der Heizquelle erstrecken können. Dabei können das Heizrohr und die Heizquelle derart ausgebildet sein, dass sich ein Spalt zwischen einer Wandung des Heizrohrs und der Heizquelle ausbildet. Dabei kann über ein Ende des Heizrohrs ein Fluid, insbesondere Luft, in das Heizrohr eingeführt werden. Das Fluid wird durch die Heizquelle erwärmt und tritt aus der Zündeinrichtung durch die Durchbrüche aus.

Die Zündeinrichtung bietet den Vorteil, dass durch das Vorsehen von Durchbrüchen an unterschiedlichen Stellen entlang der Mittelachse des Aufnahmekörpers erwärmtes Fluid an unterschiedlichen Stellen ausgegeben werden kann. Dadurch kann erreicht werden, dass unabhängig von der Befüllung des Aufnahmekörpers mit Pyrolysegut zu Beginn des Pyrolysevorgangs eine Flammbildung an einer oberen Schicht des Pyrolyseguts erfolgt. Dadurch kann eine möglichst rauchfreie Flammbildung realisiert werden.

Alternativ oder zusätzlich kann die Vorrichtung außerdem eine andere Zündeinrichtung zum Zünden von Pyrolsegut aufweisen. Die andere Zündeinrichtung kann zur Mittelachse des Aufnahmekörpers quer, insbesondere senkrecht, verlaufen. Dabei kann sich die andere Zündeinrichtung durch das Abdeckelement und/oder die Wandung des Aufnahmekörpers erstrecken. Das Abdeckelement und/oder die Wandung können mehrere entlang der Mittelachse versetzt zueinander angeordnete Löcher aufweisen. Dies bietet den Vorteil, dass die andere Zündeinrichtung je nach Befüllung des Aufnahmekörpers an unterschiedlichen Stellen eingebracht werden kann. Insbesondere kann die andere Zündeinrichtung derart eingebracht werden, dass sichergestellt ist, dass zu Beginn des Pyrolysevorgangs eine Flammbildung an einer oberen Schicht des Pyrolyseguts erfolgt. Dadurch kann eine möglichst rauchfreie Flammbildung realisiert werden. Die andere Zündeinrichtung kann einen Glühzylinder und/oder einen Glühzünder aufweisen.

In den Figuren ist Erfindungsgegenstand schematisch dargestellt, wobei gleiche oder gleichwirkende Elemente zumeist mit denselben Bezugszeichen versehen sind. Dabei zeigt:
- Fig. 1: eine Darstellung einer Vorrichtung gemäß einer ersten Ausführung
- Fig. 2: eine Darstellung der in Figur 1 gezeigten Vorrichtung ohne Deckel,
- Fig. 3: einen Teil der in Fig. 2 gezeigten Vorrichtung,
- Fig. 4: eine Draufsicht auf den in Fig. 2 gezeigten Teil der Vorrichtung,
- Fig. 5: eine Seitenansicht des in Fig. 3 gezeigten Teils der Vorrichtung,
- Fig. 6: ein Abdeckelement der in Fig. 1 gezeigten Vorrichtung.
- Fig. 7: eine Seitenschnittansicht einer erfindungsgemäßen Vorrichtung.

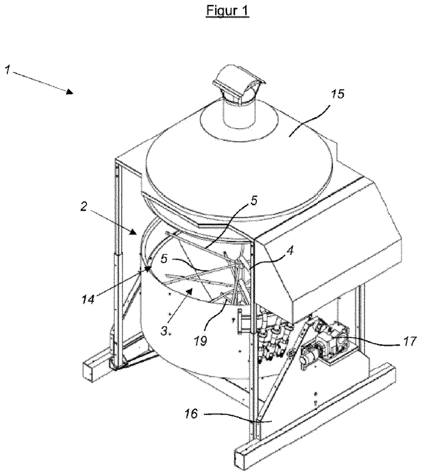

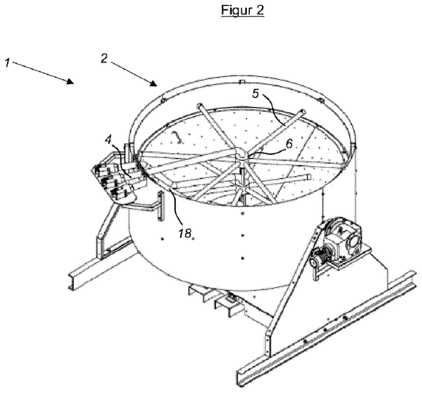

Eine in den Figuren 1 und 2 jeweils gezeigte Vorrichtung 1 zum Pyrolysieren von Pyrolysegut, wie Biomasse, weist einen Aufnahmekörper 2 auf, der einen Hohlraum 3 aufweist, in den in den

Figuren nicht dargestelltes Pyrolysegut eingebracht werden kann. Der Aufnahmekörper 2 ist zylinderförmig ausgebildet und weist ein offenes Ende mit einer Zuführöffnung 14 auf. Dabei kann Pyrolysegut über die Zuführöffnung 14 in den Hohlraum 3 des Aufnahmekörpers 2 eingebracht werden.

Darüber hinaus weist die Vorrichtung 1 eine Fluidzuführleitung 4 auf, die teilweise außerhalb des Aufnahmekörpers 2 angeordnet ist. Der außerhalb des Aufnahmekörpers 2 befindliche Teil der Fluidzuführleitung 4 wird mit in den Figuren nicht dargestellten weiteren Leitungen verbunden. Durch die Fluidzuführleitung 4 wird Fluid, wie Luft, befördert, das in den Hohlraum 3 ausgegeben wird.

Darüber hinaus weist die Vorrichtung 1 mehrere in dem Hohlraum 3 angeordnete Fluidverteilleitungen 5 zum Verteilen des durch die Fluidzuführleitung 4 zugeführten Fluids innerhalb des Hohlraums 3 auf. Die Fluidverteilleitungen 5 sind mit der Fluidzuführleitung 4 fluidisch verbunden. Dabei erstrecken sich die Fluidverteilleitungen 5 von einem Ende der Fluidzuführleitung 4 in unterschiedliche Richtungen R.

Die Vorrichtung 1 weist außerdem einen Haltekörper 16 auf, der beim Betrieb der Vorrichtung 1 ortsfest angeordnet ist. Der Haltekörper 16 dient zum drehbaren Halten des Aufnahmekörpers 2. Der Aufnahmekörper 2 kann von einer Betriebsstellung, bei der ein Pyrolysieren des Pyrolyseguts erfolgt, in eine Ausgabestellung, bei der das pyrolysierte Pyrolysegut ausgegeben werden kann, überführt werden. In Figur 1 ist eine Zwischenstellung zwischen der Betriebsstellung und der Ausgangsstellung dargestellt. Zum Überführen des Aufnahmekörpers 2 von der Betriebsstellung in die Ausgabestellung oder umgekehrt weist die Vorrichtung 1 einen Elektromotor 17 auf.

Die Vorrichtung 1 weist außerdem einen Deckel 15 auf, mittels dem die Zuführöffnung 14 des Aufnahmekörpers 2 verschlossen werden kann. Dabei ist der Deckel 15 relativ zu dem Aufnahmekörper 2 beweglich ausgebildet. Insbesondere kann die Zuführöffnung 14 durch Absenken des Deckels 15 verschlossen werden.

Die in Figur 2 dargestellte Vorrichtung 1 unterscheidet sich von der in Figur 1 dargestellten Vorrichtung 1 dadurch, dass kein Deckel 15 mit Deckelhalterung dargestellt ist.

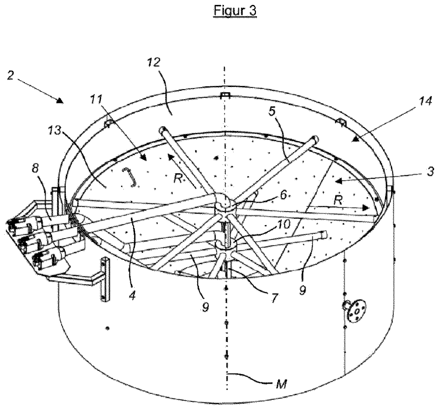

Fig. 3 zeigt eine vergrößerte Darstellung eines Teils der in Figur 2 gezeigten Vorrichtung 1. Die Vorrichtung 1 weist eine Fluidverteileinheit 6 zum Verteilen des Fluids auf die Fluidverteilleitungen 5 auf. Ein Ende der Fluidzuführleitung 4 mündet in einen nicht dargestellten Verteileinheithohlraum der Fluidverteileinheit 6. Gleichermaßen mündet jeweils ein Ende der Fluidverteilleitungen 5 in den Verteileinheithohlraum der Fluidverteileinheit 6. Die einzelnen Fluidverteilleitungen 5 sind in einer Ebene angeordnet. Die Ebene ist eine Normalebene zu einer Mittelachse M des Aufnahmekörpers 2. Die Fluidverteilleitungen 5 erstrecken sich sternförmig von der Fluidverteileinheit 6.

Die Vorrichtung 1 weist ein Stützelement 7 auf, das an einem Ende die Fluidverteileinheit 6 stützt. Das Stützelement 7 erstreckt sich entlang der Mittelachse M des Aufnahmekörpers 2. Dabei ist das Stützelement 7 und/oder die Fluidverteileinheit 6 mittig im Aufnahmekörper 2 angeordnet.

Die Vorrichtung 1 weist außerdem eine andere Fluidzuführleitung 8 auf. Die andere Fluidzuführleitung 8 erstreckt sich teilweise außerhalb des Aufnahmekörpers 2. Der sich außerhalb des Aufnahmekörpers 2 befindliche Teil der anderen Fluidzuführleitung 8 wird mit einer weiteren in den Figuren nicht dargestellten Leitung verbunden. Dabei mündet ein Ende der anderen Fluidzuführleitung 8 in einen anderen Verteileinheithohlraum einer anderen Fluidverteileinheit 10. Darüber hinaus weist die Vorrichtung 1 andere Fluidverteilleitungen 9 auf, die jeweils an einem Ende in dem anderen Verteileinheithohlraum münden und somit fluidisch mit der anderen Fluidzuführleitung 8 verbunden sind. Die anderen Fluidverteilleitungen 9 sind ebenfalls in einer anderen Ebene angeordnet, die eine andere Normalebene zu der Mittelachse des Aufnahmekörpers 2 ist. Die anderen Fluidverteilleitungen 9 erstrecken sich sternförmig von der anderen Fluidverteileinheit 10.

Die Fluidverteilleitungen 5 und die anderen Fluidverteilleitungen 9 sind entlang der Mittelachse M zueinander beabstandet angeordnet. Dabei verlaufen die Ebene und die andere Ebene parallel zueinander. Dabei weisen sowohl die Fluidverteilleitungen 5 als auch die anderen Fluidverteilleitungen 9 mehrere Auslassöffnungen auf. Das in den Fluidverteilleitungen 5 und in den anderen Fluidverteilleitungen 9 jeweils befindliche Fluid wird durch die Auslassöffnungen in den Hohlraum 3 ausgegeben. Die einzelnen Auslassöffnungen sind entlang der Richtung R der Fluidverteilleitung 5 oder der Richtung R der anderen Fluidverteilleitung 9 zueinander beabstandet angeordnet.

Das Stützelement 7 stützt die andere Fluidverteileinheit 10. Die andere Fluidverteileinheit 10 ist dabei derart ausgebildet, dass sich das Stützelement 7 durch sie hindurch erstreckt.

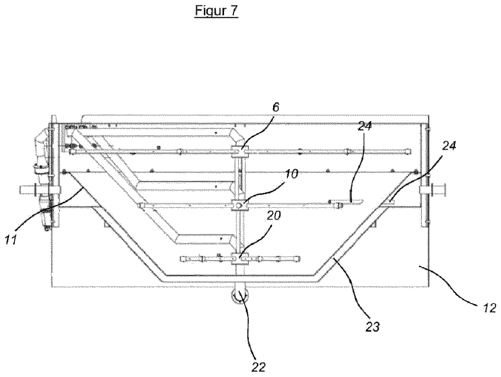

Die Vorrichtung 1 weist außerdem eine in Figur 1 gezeigte weitere Fluidzuführleitung 18, weitere Fluidverteilleitungen 19 und eine weitere Fluidverteileinheit 20 auf. Die weitere Fluidverteileinheit 20 ist in Figur 7 ersichtlich. Die einzelnen Komponenten sind identisch zu den oben bereits beschriebenen Komponenten Fluidzuführleitung 4, Fluidverteilleitungen 5 und Fluidverteileinheit 6 ausgebildet und angeordnet. Dabei ist die andere Fluidverteileinheit 10 entlang der Mittelachse M des Aufnahmekörpers 2 zwischen der Fluidverteileinheit 6 und der weiteren Fluidverteileinheit 20 angeordnet.

Die Vorrichtung 1 weist darüber hinaus ein Abdeckelement 11 auf, das einen Teil einer Wandung 12 des Aufnahmekörpers 2 bedeckt. Das Abdeckelement 11 ist wieder lösbar mit dem Aufnahmekörper 2 mechanisch verbunden. Es weist eine Vielzahl von Löchern 13 auf, durch die ein Fluid in den Hohlraum 3 des Aufnahmekörpers strömen kann. Das Abdeckelement 11 ist derart in den Hohlraum 3 angeordnet, dass das in dem Hohlraum 3 befindliche Pyrolysegut auf dem Abdeckelement 11 liegt. Dabei ist das Abdeckelement 11 derart ausgebildet, dass sich zwischen der Wandung 12 und dem Abdeckelement 11 ein in den Figuren nicht dargestellter Spalt ausbildet.

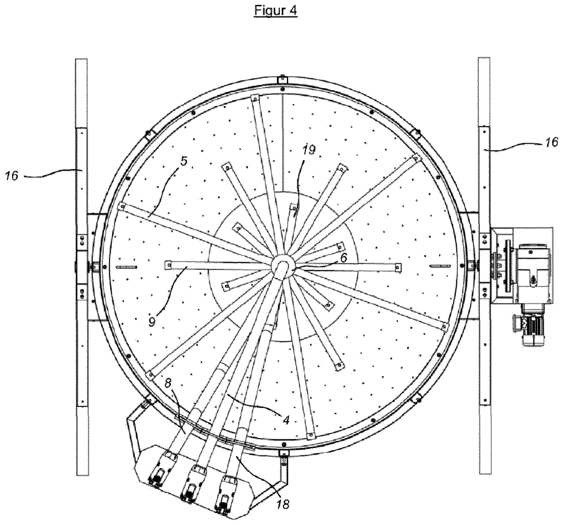

Fig. 4 zeigt eine Draufsicht auf die in Fig. 2 gezeigte Vorrichtung. Aus Figur 4 ist ersichtlich, dass die Fluidverteilleitungen 5, die anderen Fluidverteilleitungen 9 und die weiteren Fluidverteilleitungen 20 in tangentialer Richtung jeweils versetzt zueinander angeordnet sind. Darüber hinaus ist ersichtlich, dass sich die Länge der Fluidverteilleitung 5, der anderen Fluidverteilleitung 9 und der weiteren Fluidverteilleitung 19 voneinander unterscheiden. So sind die Fluidverteilleitungen 5 länger ausgebildet als die anderen Fluidverteilleitungen 9. Die anderen Fluidverteilleitung 9 sind wiederum länger ausgebildet als die weiteren Fluidverteilleitungen 19.

Aus Figur 4 ist ebenfalls ersichtlich, dass eine Vielzahl von Löchern 13 im Abdeckelement 11 angeordnet ist, die sowohl in Umfangsrichtung als auch in radialer Richtung voneinander beabstandet angeordnet sind.

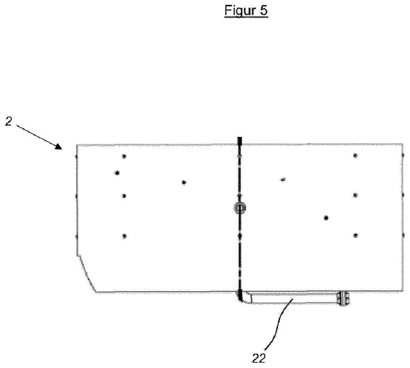

Figur 5 zeigt eine Seitenansicht eines Teils der in Fig. 3 dargestellten Vorrichtung 1. Die Vorrichtung 1 weist eine Fluidzugabeleitung 22 auf, mittels der ein Fluid in einen in Figur 7 dargestellten Spalt 23 zwischen dem Abdeckelement 11 und der Wandung 12 des Aufnahmekörpers 2 zugeführt wird.

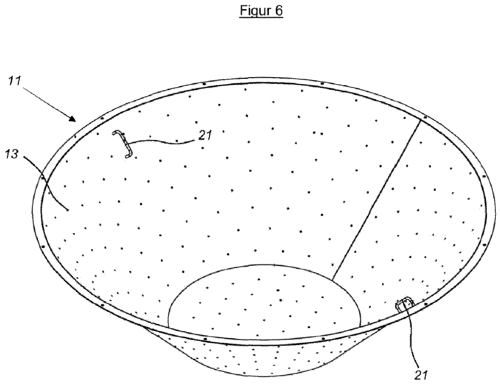

Fig. 6 zeigt ein Abdeckelement 11, das in der in Fig. 1 gezeigten Vorrichtung 1 zum Einsatz kommt. Das Abdeckelement 11 ist kegelstumpfförmig ausgebildet. Das Abdeckelement 11 weist zwei Haltegriffe 21 auf, mittels denen das Abdeckelement 11 getragen und in die gewünschte Stelle im Hohlraum 3 des Aufnahmekörpers 2 überführt werden kann.

Fig. 7 zeigt eine erfindungsgemäße Vorrichtung 1. Die Vorrichtung 1 unterscheidet sich von der in den Figuren 1 bis 6 dargestellten Vorrichtung 1 darin, dass sie eine Zündeinrichtung 24 aufweist. Die Zündeinrichtung 24 dient zum zusätzlichen Zünden des Pyrolyseguts und erstreckt im Wesentlichen radial zu der Mittelachse M des Aufnahmekörpers 2.

Die Zündeinrichtung 24 erstreckt sich sowohl durch das Abdeckelement 11 als auch die Wandung 12 des Aufnahmekörpers 2. Dies ist möglich, weil sowohl das Abdeckelement 11 als auch die Wandung 12 Löcher aufweist, durch die die Zündeinrichtung 24 durchgeführt werden kann.

### Bezugszeichenliste

- 1: Vorrichtung
- 2: Aufnahmekörper
- 3: Hohlraum
- 4: Fluidzuführleitung
- 5: Fluidverteilleitung
- 6: Fluidverteileinheit
- 7: Stützelement
- 8: andere Fluidzuführleitung
- 9: andere Fluidverteilleitung
- 10: andere Fluidverteileinheit
- 11: Abdeckelement
- 12: Wandung
- 13: Loch
- 14: Zuführöffnung
- 15: Deckel
- 16: Haltekörper
- 17: Elektromotor
- 18: weitere Fluidzuführleitung
- 19: weitere Fluidverteilleitungen
- 20: weitere Fluidverteileinheit
- 21: Haltegriff
- 22: Fluidzugabeleitung

- M: Mittelachse
- R: Richtung

## Patentansprüche

1. Vorrichtung (1) zum Pyrolysieren von Pyrolysegut, mit
einem Aufnahmekörper (2), der einen Hohlraum (3) zum Aufnehmen des Pyrolyseguts aufweist,
einer Fluidzuführleitung (4), die teilweise außerhalb des Aufnahmekörpers (2) angeordnet ist,
mehreren in dem Hohlraum (3) angeordneten Fluidverteilleitungen (5) zum Verteilen des durch die Fluidzuführleitung (4) zugeführten Fluids innerhalb des Hohlraums (3), wobei die Fluidverteilleitungen (5) mit der Fluidzuführleitung (4) fluidisch verbunden sind und sich innerhalb des Hohlraums (3) in unterschiedliche Richtungen (R1, R2) erstrecken, und
einer, insbesondere mittig, im Hohlraum (3) angeordneten Fluidverteileinheit (6) mit einem Verteileinheithohlraum zum Verteilen des durch die Fluidzuführleitung (4) zugeführten Fluids auf die Fluidverteilleitungen (5), **dadurch gekennzeichnet, dass**:
die Vorrichtung (1) ein Abdeckelement (11) zum Abdecken eines Teils einer Wandung (12) des Aufnahmekörpers (2) aufweist, das eine Vielzahl von Löchern (13) aufweist und im Hohlraum (3) angeordnet ist; und
die Vorrichtung (1) eine Fluidzugabeleitung (22) aufweist, wobei das durch die Fluidzugabeleitung (22) zugeführte Fluid durch die Löcher (13) im Abdeckelement (11) zum Pyrolysegut zuführbar ist und die Fluidzugabeleitung (22) im Aufnahmekörper (2) mündet.

2. Vorrichtung (1) nach Anspruch 1, **dadurch gekennzeichnet, dass**
a. die Fluidverteilleitungen (5) in einer Ebene angeordnet sind oder dass
b. die Fluidverteilleitungen (5) in einer Ebene angeordnet sind und die Ebene eine Normalebene zu einer Mittelachse (M) des Aufnahmekörpers (2) ist.

3. Vorrichtung (1) nach Anspruch 1 oder 2, **dadurch gekennzeichnet, dass**
a. eine Fluidverteilleitung (5) mehrere Auslassöffnungen aufweist oder dass
b. eine Fluidverteilleitung (5) mehrere Auslassöffnungen aufweist und die Auslassöffnungen in radialer Richtung bezogen auf eine Mittelachse (M) des Aufnahmekörpers (2) benachbart zueinander angeordnet sind.

4. Vorrichtung (1) nach einem der Ansprüche 1 bis 3, **dadurch gekennzeichnet, dass**
a. sich die Fluidverteilleitungen (5) von der Fluidzuführleitung (4) sternförmig erstrecken und/oder dass
b. sich die Fluidverteilleitungen (5) in radialer Richtung bezogen auf eine Mittelachse (M) des Aufnahmekörpers (2) erstrecken und/oder dass
c. ein Ende der Fluidzuführleitung (4) in dem Verteileinheithohlraum mündet und/oder dass
d. ein Ende der Fluidverteilleitung (5) in dem Verteileinheithohlraum mündet und/oder dass
e. die Vorrichtung (1) ein innerhalb des Hohlraums (3) angeordnetes Stützelement (7) zum Stützen der Fluidverteilleitungen (5) aufweist.

5. Vorrichtung (1) nach einem der Ansprüche 1 bis 4, **dadurch gekennzeichnet, dass** die Vorrichtung (1) eine andere Fluidzuführleitung (8), die teilweise außerhalb des Aufnahmekörpers (2) angeordnet ist, und mehrere in dem Hohlraum angeordnete andere Fluidverteilleitungen (9) zum Verteilen des durch die andere Fluidzuführleitung (8) zugeführten Fluids innerhalb des Hohlraums (3) aufweist, wobei die anderen Fluidverteilleitungen (9) mit der anderen Fluidzuführleitung (8) fluidisch verbunden sind und sich innerhalb des Hohlraums (3) in unterschiedliche Richtungen erstrecken.

6. Vorrichtung (1) nach Anspruch 5, **dadurch gekennzeichnet, dass**
a. die anderen Fluidverteilleitungen (9) in einer anderen Ebene angeordnet sind oder dass
b. die anderen Fluidverteilleitungen (9) in einer anderen Ebene angeordnet sind und die andere Ebene versetzt zu der Ebene angeordnet ist und/oder die andere Ebene parallel zu der Ebene verläuft.

7. Vorrichtung (1) nach Anspruch 5 oder 6, **dadurch gekennzeichnet, dass**
a. wenigstens eine Luftverteilleitung (9) in tangentialer Richtung bezogen auf eine Mittelachse (M) des Aufnahmekörpers (2) versetzt zu einer Luftverteilleitung (5) angeordnet ist und/oder dass
b. sich eine Länge einer Luftverteilleitung (5) von einer Länge einer anderen Luftverteilleitung (9) unterscheidet und/oder dass
c. die Vorrichtung (1) eine andere Fluidverteileinheit (10) mit einem anderen Verteileinheithohlraum zum Verteilen des durch die andere Fluidzuführleitung (8) zugeführten Fluids auf die anderen Fluidverteilleitungen (5) aufweist und/oder dass
d. das Stützelement (7) sowohl die andere Fluidverteileinheit (10) als auch die Fluidverteileinheit (6) stützt und/oder dass
e. das Stützelement (7) sowohl die Fluidverteilleitungen (5) als auch die anderen Fluidverteilleitungen (9) stützt.

8. Vorrichtung (1) nach einem der Ansprüche 5 bis 7, **dadurch gekennzeichnet, dass**
a. die Fluidzuführleitung (4) und die andere Fluidzuführleitung (8) wenigstens teilweise in einer Normalebene zur Mittelachse (M) des Aufnahmekörpers (2) angeordnet sind und/oder dass
b. ein Fluidstrom und/oder eine Fluidtemperatur in der Fluidzuführleitung (4) und ein Fluidstrom und/oder eine Fluidtemperatur in der anderen Fluidzuführleitung (8) unabhängig voneinander steuerbar oder regelbar ist und/oder dass
c. die Vorrichtung (1) eine elektrische Steuer- oder Regelvorrichtung zum Steuern oder Regeln eines Fluidstroms und/oder einer Fluidtemperatur in der Fluidzuführleitung (4) und des Fluidstroms und/oder einer Fluidtemperatur in der anderen Fluidzuführleitung (8) aufweist.

9. Vorrichtung (1) nach Anspruch 1, **dadurch gekennzeichnet, dass**
a. das Abdeckelement (11) derart in dem Hohlraum (3) angeordnet ist, dass ein Spalt (23) zwischen einer Wandung (12) des Aufnahmekörpers (2) und dem Abdeckelement (11) besteht und/oder dass
b. das Abdeckelement (11) kegelstumpfförmig ausgebildet ist.

10. Vorrichtung (1) nach Anspruch 1, **dadurch gekennzeichnet, dass** die Vorrichtung (1) konfiguriert ist, das durch die Fluidzugabeleitung (22) zugeführte Fluid mit einer niedrigeren oder höheren Temperatur zuzuführen als das durch die Fluidzuführleitung (4) und/oder die andere Fluidzuführleitung (8) jeweils zugeführte Fluid.

11. Vorrichtung (1) nach einem der Ansprüche 1 bis 10, **dadurch gekennzeichnet, dass** der Aufnahmekörper (2) ein offenes Ende mit einer Zuführöffnung (14) zum Zuführen von Pyrolysegut in den Aufnahmekörper (2) aufweist.

12. Vorrichtung (1) nach Anspruch 11, **dadurch gekennzeichnet, dass**
a. die Vorrichtung (1) einen bewegbaren Deckel (15) aufweist, mittels dem die Zuführöffnung (14) verschließbar ist oder dass
b. die Vorrichtung (1) einen bewegbaren Deckel (15) aufweist, mittels dem die Zuführöffnung (14) verschließbar ist und der Deckel (15) linear beweglich ist und/oder dass der Deckel (15) in einer Öffnungsstellung oberhalb von dem Aufnahmekörper (2) angeordnet ist.

13. Vorrichtung (1) nach einem der Ansprüche 1 bis 12, **dadurch gekennzeichnet, dass**
a. die Vorrichtung (1) einen Haltekörper (16) zum drehbaren Halten des Aufnahmekörpers (2) aufweist oder dass
b. die Vorrichtung (1) einen Haltekörper (16) zum drehbaren Halten des Aufnahmekörpers (2) aufweist und der Aufnahmekörper (2) relativ zu dem Haltekörper (16) in eine Ausgabestellung, in der das Pyrolysegut ausgebbar ist, oder eine Betriebsstellung, in der das Pyrolysegut pyrolysierbar ist, drehbar ist.

## Claims

1. Device (1) for pyrolyzing pyrolysis goods, comprising
a receiving body (2) having a cavity (3) for receiving the pyrolysis goods,
a fluid feed line (4) arranged partially outside the receiving body (2),
a plurality of fluid distribution lines (5), arranged in the cavity (3), for distributing the fluid fed by the fluid feed line (4) inside of the cavity (3), wherein the fluid distribution lines (5) are fluidically connected to the fluid feed line (4) and extend in different directions (R1, R2) inside the cavity (3), and
a fluid distribution unit (6) arranged inside the cavity (3), in particular centrally, the fluid distribution unit comprising a distribution unit cavity for distributing to the fluid distribution lines (5) the fluid fed by the fluid feed line (4), **characterized in that**:
the device (1) has a cover element (11) for covering a part of a wall (12) of the receiving body (2), the cover element having multiple holes (13) and being arranged inside the cavity (3); and
the device (1) has a fluid input line (22), wherein the fluid fed by the fluid input line (22) can be fed through the holes (13) in the cover element (11) to the pyrolysis goods, and the fluid input line (22) opens into the receiving body (2).

2. The device (1) according to claim 1, **characterized in that**
a. the fluid distribution lines (5) are arranged in a plane or that
b. the fluid distribution lines (5) are arranged in a plane and the plane is a normal plane to a central axis (M) of the receiving body (2).

3. The device (1) according to claim 1 or 2, **characterized in that**
a. a fluid distribution line (5) has a plurality of outlet openings, or that
b. a fluid distribution line (5) has a plurality of outlet openings and the outlet openings are arranged adjacent to one another in the radial direction with respect to a central axis (M) of the receiving body (2).

4. The device (1) according to one of claims 1 to 3, **characterized in that**
a. the fluid distribution lines (5) extend in a star pattern from the fluid feed line (4) and/or that
b. the fluid distribution lines (5) extend in the radial direction with respect to a central axis (M) of the receiving body (2) and/or that
c. an end of the fluid feed line (4) opens into the distribution unit cavity and/or that
d. an end of the fluid distribution line (5) opens into the distribution unit cavity and/or that
e. the device (1) has a support element (7) for supporting the fluid distribution lines (5), the support element being arranged inside the cavity (3).

5. The device (1) according to one of claims 1 to 4, **characterized in that** the device (1) has another fluid feed line (8) which is arranged partially outside the receiving body (2) and a plurality of other fluid distribution lines (9) arranged inside the cavity for distributing, inside the cavity (3), the fluid fed by the other fluid feed line (8), wherein the other fluid distribution lines (9) are fluidically connected to the other fluid feed line (8) and extend in different directions inside the cavity (3).

6. The device (1) according to claim 5, **characterized in that**
a. the other fluid distribution lines (9) are arranged in another plane or that
b. the other fluid distribution lines (9) are arranged in another plane and the other plane is arranged offset relative to the plane and/or the other plane runs parallel to the plane.

7. The device (1) according to claim 5 or 6, **characterized in that**
a. at least one air distribution line (9) is arranged offset in the tangential direction with respect to a central axis (M) of the receiving body (2) relative to an air distribution line (5) and/or that
b. a length of an air distribution line (5) differs from a length of another air distribution line (9) and/or that
c. the device (1) has another fluid distribution unit (10) comprising another distribution unit cavity for distributing, to the other fluid distribution lines (5), the fluid fed by the other fluid feed line (8) and/or that
d. the support element (7) supports both the other fluid distribution unit (10) and the fluid distribution unit (6) and/or that
e. the support element (7) supports both the fluid distribution lines (5) and the other fluid distribution lines (9).

8. The device (1) according to one of claims 5 to 7, **characterized in that**
a. the fluid feed line (4) and the other fluid feed line (8) are at least partially arranged in a normal plane relative to the central axis (M) of the receiving body (2) and/or that
b. a fluid flow and/or a fluid temperature in the fluid feed line (4) and a fluid flow and/or a fluid temperature in the other fluid feed line (8) are open-loop controllable or closed-loop controllable independently of one another and/or that
c. the device (1) has an electric open-loop or closed-loop control device for open-loop controlling or closed-loop controlling a fluid flow and/or a fluid temperature in the fluid feed line (4) and the fluid flow and/or a fluid temperature in the other fluid feed line (8).

9. The device (1) according to claim 1, **characterized in that**
a. the cover element (11) is arranged in the cavity (3) in such a way that a gap (23) is formed between a wall (12) of the receiving body (2) and the cover element (11) and/or that
b. the cover element (11) is designed in the form of a truncated cone.

10. The device (1) according to claim 1, **characterized in that** the device (1) is configured to feed the fluid fed by the fluid input line (22) at a lower or higher temperature than the fluid fed by the fluid feed line (4) and/or the other feed line (8), respectively.

11. The device (1) according to one of claims 1 to 10, **characterized in that** the receiving body (2) has an open end with a feed opening (14) for feeding pyrolysis goods to the receiving body (2).

12. The device (1) according to claim 11, **characterized in that**
a. the device (1) has a movable cover (15) by means of which the feed opening (14) can be closed, or that
b. the device (1) has a movable cover (15) by means of which the feed opening (14) can be closed and the cover (15) can be moved linearly and/or that the cover (15) is arranged above the receiving body (2) in an open position.

13. The device (1) according to one of claims 1 to 12, **characterized in that**
a. the device (1) has a holding body (16) for rotatably holding the receiving body (2) or that
b. the device (1) has a holding body (16) for rotatably holding the receiving body (2) and the receiving body (2) is rotatable, relative to the holding body (16), to a discharge position in which the pyrolysis goods can be discharged, or to an operating position in which the pyrolysis goods can be pyrolyzed.

## Revendications

1. Dispositif (1) pour la pyrolyse d'une matière à pyrolyser, comprenant
un corps de réception (2) qui présente une cavité (3) pour la réception de la matière à pyrolyser,
une conduite d'alimentation en fluide (4), partiellement disposée à l'extérieur du corps de réception (2),
plusieurs conduites de distribution de fluide (5) disposées dans la cavité (3) pour la distribution du fluide introduit par la conduite d'alimentation en fluide (4) à l'intérieur de la cavité (3), dans lesquelles les conduites de distribution de fluide (5) sont connectées de manière fluidique à la conduite d'alimentation en fluide (4) et s'étendent dans des directions différentes (R1, R2) à l'intérieur de la cavité (3), et
une unité de distribution de fluide (6), disposée notamment au centre de la cavité (3), avec une cavité d'unité de distribution pour la distribution du fluide introduit par la conduite d'alimentation en fluide (4) aux conduites de distribution de fluide (5), **caractérisé en ce que** :
le dispositif (1) présente un élément de couverture (11) pour couvrir une partie d'une paroi (12) du corps de réception (2), qui présente une pluralité de trous (13) et est disposé dans la cavité (3) ; et
le dispositif (1) présente une conduite secondaire de fluide (22), dans laquelle le fluide introduit par la conduite secondaire de fluide (22) peut être dirigé vers la matière à pyrolyser à travers les trous (13) de l'élément de couverture (11), et la conduite secondaire de fluide (22) débouche dans le corps de réception (2).

2. Dispositif (1) de la revendication 1, **caractérisé en ce que**
a. les conduites de distribution de fluide (5) sont disposées dans un plan, ou
b. les conduites de distribution de fluide (5) sont disposées dans un plan, et le plan est normal par rapport à un axe médian (M) du corps de réception (2).

3. Dispositif (1) selon la revendication 1 ou 2, **caractérisé en ce que**
a. une conduite de distribution de fluide (5) présente plusieurs ouvertures de sortie, ou
b. une conduite de distribution de fluide (5) présente plusieurs ouvertures de sortie, et les ouvertures de sortie sont disposées de manière adjacente les unes par rapport aux autres dans une direction radiale par rapport à un axe médian (M) du corps de réception (2).

4. Dispositif (1) selon l'une des revendications 1 à 3, **caractérisé en ce que**
a. les conduites de distribution de fluide (5) s'étendent en formation étoilée à partir de la conduite d'alimentation en fluide (4) et/ou
b. les conduites de distribution de fluide (5) s'étendent dans une direction radiale par rapport à un axe médian (M) du corps de réception (2) et/ou
c. une extrémité de la conduite d'alimentation en fluide (4) débouche dans la cavité d'unité de distribution et/ou
d. une extrémité de la conduite de distribution de fluide (5) débouche dans la cavité d'unité de distribution et/ou
e. le dispositif (1) présente un élément de support (7) disposé à l'intérieur de la cavité (3) pour le soutien des conduites de distribution de fluide (5).

5. Dispositif (1) selon l'une des revendications 1 à 4, **caractérisé en ce que** le dispositif (1) présente une autre conduite d'alimentation en fluide (8), partiellement disposée à l'extérieur du corps de réception (2), et plusieurs autres conduites de distribution de fluide (9) disposées dans la cavité (3) pour la distribution du fluide introduit par l'autre conduite d'alimentation en fluide (8) à l'intérieur de la cavité (3), dans lesquelles les autres conduites de distribution de fluide (9) sont connectées de manière fluidique à l'autre conduite d'alimentation en fluide (8) et s'étendent dans différentes directions à l'intérieur de la cavité (3).

6. Dispositif (1) selon la revendication 5, **caractérisé en ce que**
a. les autres conduites de distribution de fluide (9) sont disposées dans un autre plan, ou
b. les autres conduites de distribution de fluide (9) sont disposées dans un autre plan, et l'autre plan est disposé de manière décalée par rapport au plan et/ou l'autre plan est parallèle au plan.

7. Dispositif (1) de la revendication 5 ou 6, **caractérisé en ce que**
a. au moins une conduite de distribution d'air (9) est disposée de manière décalée par rapport à une conduite de distribution d'air (5) dans une direction tangentielle par rapport à un axe médian (M) du corps de réception (2), et/ou
b. une longueur d'une conduite de distribution d'air (5) diffère d'une longueur d'une autre conduite de distribution d'air (9) et/ou
c. le dispositif (1) présente une autre unité de distribution de fluide (10) avec une autre cavité d'unité de distribution pour la distribution du fluide introduit par l'autre conduite d'alimentation en fluide (8) aux autres conduites de distribution de fluide (5) et/ou
d. l'élément de support (7) soutient à la fois l'autre unité de distribution de fluide (10) et l'unité de distribution de fluide (6) et/ou
e. l'élément de support (7) soutient à la fois les conduites de distribution de fluide (5) et les autres conduites de distribution de fluide (9).

8. Dispositif (1) selon l'une des revendications 5 à 7, **caractérisé en ce que**
a. la conduite d'alimentation en fluide (4) et l'autre conduite d'alimentation en fluide (8) sont au moins partiellement disposées dans un plan normal par rapport à l'axe médian (M) du corps de réception (2) et/ou
b. un débit de fluide et/ou une température de fluide dans la conduite d'alimentation en fluide (4) et un débit de fluide et/ou une température de fluide dans l'autre conduite d'alimentation en fluide (8) peuvent être commandables ou régulables indépendamment l'un de l'autre, et/ou
c. le dispositif (1) présente un dispositif de commande ou de régulation électrique pour la commande ou la régulation d'un débit de fluide et/ou d'une température de fluide dans la conduite d'alimentation en fluide (4) et un débit de fluide et/ou une température de fluide dans l'autre conduite d'alimentation en fluide (8).

9. Dispositif (1) selon la revendication 1, **caractérisé en ce que**
a. l'élément de couverture (11) est disposé dans la cavité (3) de manière à créer un espace (23) entre une paroi (12) du corps de réception (2) et l'élément de couverture (11) et/ou
b. l'élément de couverture (11) est en forme de tronc de cône.

10. Dispositif (1) selon la revendication 1, **caractérisé en ce que** le dispositif (1) est configuré pour amener le fluide introduit par la conduite secondaire de fluide (22) avec une température inférieure ou supérieure à celle du fluide respectivement introduit par la conduite d'alimentation en fluide (4) et/ou l'autre conduite d'alimentation en fluide (8).

11. Dispositif (1) selon l'une des revendications 1 à 10, **caractérisé en ce que** le corps de réception (2) présente une extrémité ouverte avec une ouverture d'alimentation (14) pour l'introduction de la matière à pyrolyser dans le corps de réception (2).

12. Dispositif (1) selon la revendication 11, **caractérisé en ce que**
a. le dispositif (1) présente un couvercle mobile (15), au moyen duquel l'ouverture d'alimentation (14) peut être fermée, ou
b. le dispositif (1) présente un couvercle mobile (15), au moyen duquel l'ouverture d'alimentation (14) peut être fermée, et le couvercle (15) est mobile de manière linéaire et/ou le couvercle (15) est disposé en position d'ouverture au-dessus du corps de réception (2).

13. Dispositif (1) selon l'une des revendications 1 à 12, **caractérisé en ce que**
a. le dispositif (1) présente un corps de maintien (16) pour le maintien en rotation du corps de réception (2), ou
b. le dispositif (1) présente un corps de maintien (16) pour le maintien en rotation du corps de réception (2), et le corps de réception (2) peut être tourné par rapport au corps de maintien (16) dans une position de déchargement, dans laquelle la matière à pyrolyser peut être déchargée, ou une position de fonctionnement, dans laquelle la matière à pyrolyser peut être pyrolysée.
